# EUROPEAN PATENT SPECIFICATION

(11) **EP 3 650 396 B1**
(45) Date of publication and mention of the grant of the patent: **20.05.2026**
(21) Application number: 18204951.0
(22) Date of filing: 07.11.2018
(51) Int. Cl.: B60S 9/02, B66C 23/88, E02F 9/22, B66C 23/80, E02F 9/08

(54) **LEVELLING SYSTEM FOR A VEHICLE, AND A METHOD IN RELATION TO THE SYSTEM**
NIVELLIERSYSTEM FÜR EIN FAHRZEUG UND VERFAHREN IM ZUSAMMENHANG MIT DEM SYSTEM
SYSTÈME DE MISE À NIVEAU POUR VÉHICULE ET PROCÉDÉ EN RELATION AVEC LE SYSTÈME

(43) Date of publication of application: 13.05.2020
(73) Proprietor: Hiab AB, 215 32 Malmö (SE)
(72) Inventor: ÅKERLUND, Johan, 824 40 Hudiksvall (SE)
(74) Representative: Bjerkén Hynell KB

(56) References cited:
- EP-A1- 0 482 298
- EP-A1- 3 335 948
- EP-A1- 3 498 548
- CN-A- 103 043 041
- CN-B- 102 079 298
- JP-A- 2000 118 956
- JP-A- 2000 136 090
- JP-A- 2016 160 000
- US-A1- 2017 234 119
- US-B1- 10 124 773

## Description

### Technical field

The present disclosure relates to a levelling system for a vehicle, and a method in relation to the system, adapted to control support legs applied to stabilize the vehicle and keep the base plane of the vehicle in an essentially horizontal plane.

### Background

A vehicle provided with a working equipment, e.g. a crane, is normally provided with support legs for stabilizing the vehicle body of a vehicle. The support legs are necessary to maintain to level of the vehicle even on an inclined ground, which is denoted levelling herein. The reason for why levelling of the vehicle is needed is to ensure safety when working with the equipment and also to make sure that the working equipment can perform according to a specified capacity.

Systems known in the prior art performed levelling of the vehicle body by manually adjusting the position of and also pressure supplied by the support legs extending from the working vehicle. That method, however, was difficult and inefficient as it required an operator to manually move to the site of the support leg and adjust its position and pressure supplied by the support leg and then return to the vehicle to check the levelling of the vehicle by a visual estimate of the vehicle as a whole or by controlling the individual levelling of different parts of the vehicle, by visually controlling the levelling of e.g. small spirit-levels placed on the vehicle. Manual levelling is an iterative process that can be difficult and time consuming. Today, the demand is to position the vehicle and hence the working equipment in any direction in the horizontal plane with plus/minus three degrees. This deviation angle is connected to the specified performance of the working equipment (e.g. the crane). Other deviation angles may hence also be possible, depending on the specification of the equipment.

However, there exist now automatic levelling systems that require less manual intervention than the earlier systems.

Below some patent documents within the technical field of automatic levelling will be briefly discussed.

US-6351696 relates to an automatic levelling system for a fire-fighting vehicle, configured to generate a drive signal to a solenoid for vertical adjustment of the feet of the support legs with respect to measured inclination to gravitational level, along X and Y axes. This document describes an automatic levelling system, which is adapted to avoid manual levelling which is an iterative and time consuming process.

US-5580095 relates to a vehicle body levelling device for a working vehicle having outriggers. The device comprises a controller for calculating amounts of extension of left and right jack cylinders provided on front and rear outriggers, to level vehicle body, and a two-axis inclination detector providing input signals to the controller.

US-4142710 relates to a control system for loading machine levelling jacks that senses machine level and ensures lifting and lowering jack extensions in order to keep the machine in a horizontal position.

US-2017/0234119 relates to an adaptive levelling control system for an industrial machine, in particular a drill rig. A plurality of jacks is provided that may be autonomously extended or retracted to level the machine. The levelling system is configured to automatically control levelling of the vehicle by controlling the vertical extensions of support legs provided at the vehicle for stabilizing purposes, the levelling system comprising a control unit, a sensor arrangement that is adapted to measure the deviation of a base plane of the vehicle with respect to a horizontal plane and to determine and generate a deviation signal in dependence of said measured deviation, and pressure sensor members configured to sense pressure values in an essentially vertical direction of each of the support legs, and to generate pressure signals in dependence of said sensed pressure values. The control unit is configured to generate drive signals, in dependence of the deviation signal, to be applied to drive members configured to individually adjust the vertical position of the support foot of each of the support legs.

JP-2000-118956-A discloses an angle control method and angle control method is disclosed, adapted for controlling the level of a working machine by adjusting vertical positions of several supporting members. Each supporting member is provided with a position sensor used to determine vertical position of the supporting member.

JP-2016-160000-A relates to a jack control method of an operation-in-height vehicle provided with four jacks arranged at front and rear, right and left of a vehicle chassis supporting a cabin and a loading platform. Pressure sensors are provided for detecting load sensed by each jack.

JP-2000-136090-A discloses a working vehicle provided with outriggers for ensuring stability.

Thus, the above documents disclose systems that automatically adjust the level of the vehicle to a horizontal position. The systems are applied on different types of vehicles, such as mobile cranes, trucks with cranes, concrete pumps, fire fighting vehicles with ladders and support legs, sky-lifts and also mobile homes. The cited documents disclose various systems adapted to prevent a crane vehicle from tipping over and systems preventing the crane from being operated without the support legs in the correct position.

However, there exist further improvements for a vehicle levelling system that may further assist an operator during various working procedures in order to improve the safety and also improve the performance of the crane during working procedures. The object of the present invention is to achieve such an improved vehicle levelling system.

In particular, one problem has been identified related to the maximum pressure that a support leg may apply to the ground during use, and thus consequently be exposed to.

### Summary

The above-mentioned object is achieved by the present invention according to the independent claims.

Preferred embodiments are set forth in the dependent claims.

According to a first aspect the present invention relates to a levelling system for a vehicle, configured to automatically control levelling of the vehicle by controlling the vertical extensions of support legs provided at the vehicle for stabilizing purposes. The levelling system comprises a control unit, and a sensor arrangement that is adapted to measure the deviation of a base plane of the vehicle with respect to a horizontal plane and to determine and generate a deviation signal in dependence of said sensed deviation.

The control unit is configured to be in a first mode of operation where it is configured to generate drive signals, in dependence of the deviation signal, to be applied to drive members configured to individually adjust the vertical position of a support foot of each of the support legs such that the main plane of the vehicle with respect to a horizontal plane is within a predetermined offset threshold angle from the horizontal plane.

The levelling system further comprises pressure sensor members configured to sense pressure values in an essentially vertical direction of each of the support legs, and to generate pressure signals in dependence of said sensed pressure values.

The control unit is configured to receive said pressure signals and to compare the sensed pressure values to respective predetermined valid pressure value ranges for each of the support legs, wherein if it is determined that any pressure value does not fall within a corresponding valid pressure value range, an adjusting procedure is applied resulting in that drive signals are determined, generated and applied to the drive members to adjust the vertical positions of the support feet until all pressure values fall within the valid pressure value ranges for said support legs. The vehicle is kept within the predetermined offset threshold angle from the horizontal plane during a working procedure, by applying the adjusting procedure.

If the base plane is not controlled as defined above to have a deviation in relation to the horizontal plane being less than a predetermined offset threshold angle, the working equipment, e.g. a crane, or crane parts, may experience slew (i.e., rotation about the vertical axis) and may undesirably move into an unsafe position or cause damage to the crane.

According to one embodiment the control unit is also configured to be set in a second mode of operation. When in the second mode the control unit is further configured to receive an equipment control signal including working parameters of a working procedure, e.g. a slewing movement, to be performed by a working equipment of the vehicle, e.g. a crane. The control unit is further configured to determine extended drive signals to support equipment movements related said working procedure in dependence of said working parameters, wherein the extended drive signals are to be applied to the drive members to adjust the vertical positions of said feet of said support legs. The supporting movement may be a tilting movement in a direction that creates a "downhill" impulse to e.g. a crane in a direction of a slewing movement of the crane.

According to a second aspect the present invention relates to a method of automatically controlling levelling of a vehicle by a levelling system for the vehicle.

The levelling system comprises a control unit and a sensor arrangement, the method comprises:
- measuring, by said sensor arrangement, a deviation of a base plane of the vehicle with respect to a horizontal plane,
- determining and generating a deviation signal in dependence of said measured deviation,
- generating, by said control unit, drive signals, in dependence of said deviation signal,
- applying said drive signals to drive members, and
- individually adjusting, by said drive members, the vertical position of a support foot of each of a support leg provided at the vehicle for stabilizing purposes, such that the base plane with respect to a horizontal plane is within a predetermined offset threshold angle from the horizontal plane.

The method further comprises:
- sensing, by pressure sensor members, pressure values in an essentially vertical direction of each of the support legs, and generating pressure signals in dependence of said sensed pressure values,
- receiving said pressure signals, by the control unit, and comparing said sensed pressure values to respective predetermined valid pressure value ranges for each of said support legs, wherein if it is determined that any pressure value does not fall within a corresponding valid pressure value range:
   - applying an adjusting procedure comprising determining, generating and applying drive signals to the drive members for adjusting the vertical positions of said support feet until all pressure values fall within the valid pressure value ranges for said support legs, and
   - keeping the vehicle within said predetermined offset threshold angle from said horizontal plane during a forthcoming working procedure, by applying the adjusting procedure.

By applying the system and method according to the present invention a fast and secure setup of the vehicle is achieved because the support legs are automatically adjusted such that the pressure each support leg is subjected to lies within acceptable and predetermined ranges.

In one embodiment the levelling system and method is advantageously used to support a working equipment movement by slightly tilting the vehicle which may give e.g. slewing of a crane an extra boost by tilting the vehicle in a "downhill" direction.

Further it is also an advantage for the operator that the system and method ensures the levelling of the system during a working procedure involving the vehicle. Various steps of the working procedure such as loading and unloading affects the pressure applied to the support legs and this method makes it possible to continuously adjust the support legs so that the vehicle is levelled and the pressure on the support legs is within a valid pressure range. It hence makes it easier for the operator of the vehicle and the working equipment to perform a safe working procedure and at the same time being able to achieve the full performance of the working equipment.

### Brief description of the drawings

Figure 1 shows a schematic illustration of a vehicle where a levelling system according to the present invention is applied.
Figure 2 shows a schematic block diagram of the levelling system according to the present invention.
Figure 3 shows a schematic block diagram of the levelling system according to one embodiment of the present invention.
Figure 4 shows a flow diagram illustrating the method according to the present invention.

### Detailed description

The levelling system will now be described in detail with references to the appended figures. Throughout the figures the same, or similar, items have the same reference signs. Moreover, the items and the figures are not necessarily to scale, emphasis instead being placed upon illustrating the principles of the invention.

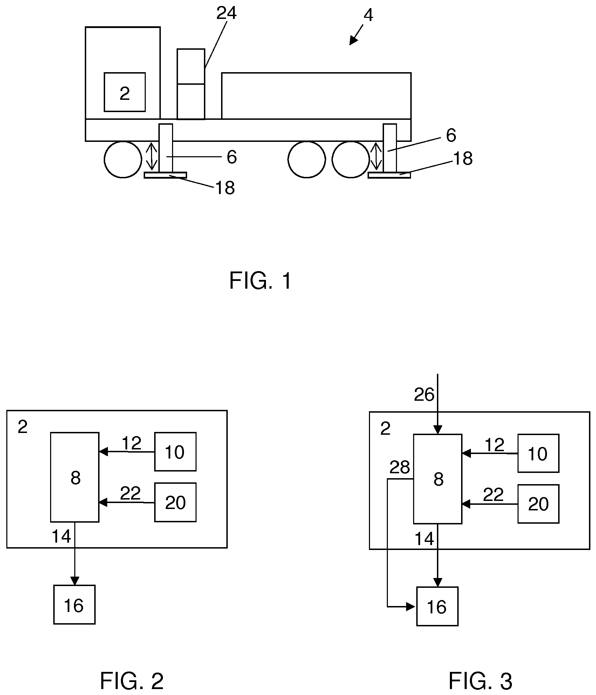

With reference first to the schematic illustration in figure 1 the present invention relates to a levelling system 2 for a vehicle 4, configured to automatically control levelling of the vehicle by controlling vertical extensions of support legs 6 provided at the vehicle for stabilizing purposes, such that a base plane of the vehicle with respect to a horizontal plane is within a predetermined offset threshold angle from the horizontal plane. Each support leg 6 is provided with a support foot 18 to provide a contact surface to ground. In figure 1 only two of the four support legs 6 are illustrated. The remaining two are arranged at corresponding locations at the other side of the vehicle. The number of support legs are dependent of the type of vehicle and of the type of working equipment. In the example discussed herein four support legs are included but any number of legs and also positions of the legs at the vehicle are possible. The vertical movements of the support legs are indicated by double-arrows. The horizontal extensions of the support legs are determined in relation to the type of working equipment 24, the type of vehicle 4, e.g. a truck, a cargo vehicle, a fire-fighting vehicle, pickup vehicles, tractors, excavators, lorries, etc. and the working procedure to be performed. The working equipment 24 may be a crane that comprises extendible booms and a working tool, e.g. a hook or a bucket, or an excavator arm, a backhoe, etc.

The base plane of the vehicle is a virtual plane defined e.g. by the framework of the vehicle or a support plane of the working equipment, as the plane that must have a horizontal orientation during use of the working equipment in order to secure safe operation.

By the expression horizontal plane used herein is meant a plane that is perpendicular with reference to gravity force.

For safe operation of a vehicle, e.g. provided with a crane, it is important that the base plane of the vehicle, which in this case is the plane of the support plane of the crane, should have a horizontal orientation, i.e. should essentially correspond to a virtual horizontal plane. As an example, a support plane of the crane must be oriented such that a vertical axis extending perpendicular to the support plane should also be essentially perpendicular to the horizontal plane.

In figure 2 a schematic block diagram of the levelling system is shown.

The levelling system 2 comprises a control unit 8, and a sensor arrangement 10 that is adapted to measure the deviation of the base plane with respect to a horizontal plane and to determine and generate a deviation signal 12 in dependence of the measured deviation. The sensor arrangement 10 may be implemented in many different ways, e.g. by one or many gravitational sensor members, gyros, MEMS-based components, angle sensor members. The sensor members may e.g. be arranged such that they measure the angular deviation of the base plane in relation to the horizontal plane along two coplanar intersecting axes.

The control unit 8 is configured to be set to work in a first mode of operation. In this first mode the control unit is configured to generate drive signals 14, in dependence of the deviation signal 12, to be applied to drive members 16 configured to individually adjust the vertical position of a support foot 18 of each of said support legs 6 such that the base plane is within a predetermined offset threshold angle from the horizontal plane. The predetermined offset threshold angle is preferably in the range of one to four degrees, and more advantageously close to three degrees, and is naturally dependent upon the type of vehicle and working equipment specifications.

Before this first mode is initiated the operator positions the vehicle in a desired position where one or many of the support legs are manually or automatically moved to an operation position. Thereafter the control unit will manually or automatically be entered into the first mode.

The levelling system 2 further comprises pressure sensor members 20 configured to sense pressure values in an essentially vertical direction of each of the support legs 6, and to generate pressure signals 22 in dependence of said sensed pressure values. The pressure sensor members may e.g. be embodied as pressure sensors adapted to measure hydraulic pressure of a hydraulic system used to generate movements of the support legs.

The control unit 8 is configured to receive the pressure signals 22 and to compare the sensed pressure values to respective predetermined valid pressure value ranges for each of the support legs 6. If it is determined that any pressure value does not fall within a corresponding valid pressure value range, an adjusting procedure is applied resulting in that drive signals 14 are determined, generated and applied to the drive members 16 to adjust the vertical positions of one or many of the support feet 18, until all pressure values falls within the valid pressure value ranges for the support legs.

The vehicle 4 is then kept within the predetermined offset threshold angle from the horizontal plane during a working procedure, and at the same time the pressure values are held within the valid pressure value ranges.

The valid pressure value ranges include maximal pressure values for each of the support legs 6. If it is determined that any pressure value exceeds a corresponding maximal pressure value, the adjusting procedure comprises a lowering procedure resulting in that the vehicle 4 is lowered by generating drive signals 14 to adjust the vertical positions of the support feet 18 until none of the sensed pressure values exceed its respective corresponding maximal pressure value. In practise that may be performed by adjusting the vertical position of the support foot having the highest pressure, i.e. slightly decreasing the pressure towards ground, until the pressure value is acceptable, and continue with one or many of the other support feet until all sensed pressure values are below a maximal pressure value. During a lowering procedure some of the pressure towards ground are moved from the support feet to the wheels of the vehicle. This is to avoid that the support legs are exposed to pressures that are close to what their construction can stand, and will hence ensure the safety during the working procedure.

The valid pressure value ranges include minimal pressure values for each of the support legs 6. If it is determined that any of the measured pressure value is below a corresponding minimal pressure value, the adjusting procedure comprises generating drive signals 14 to adjust the vertical positions of the support feet 18 until none of the sensed pressure values is below its respective corresponding minimal pressure value. This embodiment may be applicable during an unloading procedure because the pressure of the support legs normally decreases during the procedure.

The valid pressure value ranges are determined in relation to one or many parameters of the vehicle 4, a working equipment 24 of the vehicle, e.g. a crane, and a working procedure to be performed by the working equipment 24.

In another embodiment the levelling system is used to support the working procedures performed by the working equipment. This embodiment is illustrated by the schematic block diagram shown in figure 3. In this embodiment the control unit 8 is configured to work in a second mode comprising allowing deviation of the base plane in relation to the horizontal plane within a deviation offset angle during a predetermined time period to support a working procedure. The deviation offset angle may be larger than the predetermined offset threshold angle, and may in some set-ups be up to five degrees. Particularly, the second mode includes to receive an equipment control signal 26 including working parameters of a working procedure to be performed by a working equipment 24 of the vehicle, and to determine extended drive signals 28 to support equipment movements related to said working procedure in dependence of said working parameters. Deviation of the base plane is thereby allowed during the predetermined time period, wherein the extended drive signals 28 are to be applied to the drive members 16 to adjust the vertical positions of the feet 18 of the support legs 6. The predetermined time period may be in the range of one to several seconds.

In one embodiment the control unit is configured to receive a second mode control signal which may be generated by an operator by pressing a button, and the control unit is then configured to activate or deactivate the second mode in dependence of a received second mode control signal.

In one example where the second mode may be applicable is where the working procedure is e.g. a slewing movement of a crane. The working parameters included in the equipment control signal 26 comprises then e.g. information of the present extension of the crane, information of weight of a load, information regarding slewing direction to the crane.

By providing a tilting movement of the base plane during a predetermined time period during the working procedure a supporting impact to help the working equipment to perform its working procedure may be achieved.

The second mode of operation of the control unit is a supplemental mode to the first mode of operation, and is normally applied when the control unit already is in the first mode.

Also during the second mode of operation pressure values for each of the support legs may be measured and applied for control purposes. A second set of valid pressure value ranges for the support legs is then determined. This second set of valid pressure value ranges may be wider than the pressure value ranges applied when in the first mode of operation.

If it is determined that any measured pressure value does not fall within a corresponding valid pressure value range of the second set, a second adjusting procedure is applied resulting in that drive signals are determined, generated and applied to the drive members to adjust the vertical positions of one or many of the support feet, until all pressure values falls within the valid pressure value ranges for the support legs.

The present invention also relates to a method of automatically controlling the levelling of a vehicle by a levelling system for the vehicle by controlling the vertical extensions of support legs provided at the vehicle for stabilizing purposes. The levelling system comprises a control unit and a sensor arrangement. The various parts of the levelling system have been described in detail above and it is herein referred to that description.

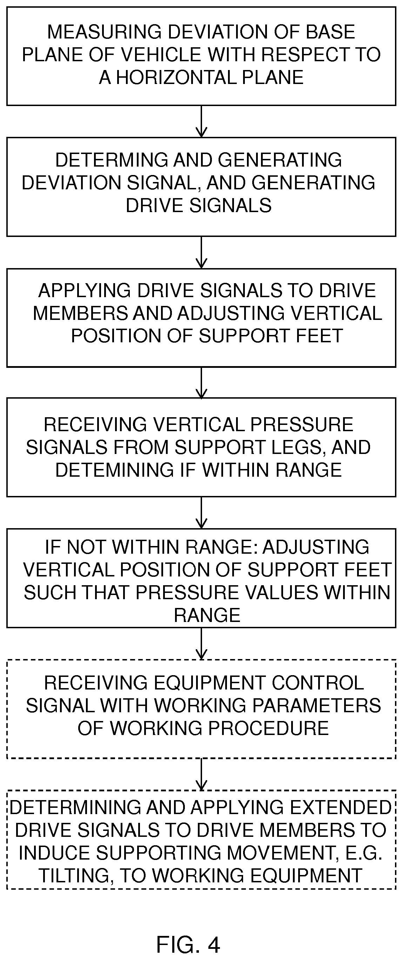

The method is schematically illustrated in the flow diagram shown in figure 4. In the diagram the boxes provided with dashed lines disclose additional embodiments of the method. The method according to the invention comprises:
- measuring, by the sensor arrangement, a deviation of a base plane of the vehicle with respect to a horizontal plane,
- determining and generating a deviation signal in dependence of the measured deviation,
- generating, by the control unit when set in a first mode, drive signals, in dependence of the deviation signal, and applying the drive signals to drive members, and
- individually adjusting, by the drive members, the vertical position of a support foot of each of the support legs, such that the deviation is within a predetermined offset threshold angle from the horizontal plane. Preferably, the offset threshold angle is three degrees.

The method further comprises:
- sensing, by pressure sensor members, pressure values in an essentially vertical direction of each of the support legs, and generating pressure signals in dependence of said sensed pressure values,
- receiving said pressure signals, by the control unit, and comparing said sensed pressure values to respective predetermined valid pressure value ranges for each of said support legs, wherein if it is determined that any of the sensed pressure value does not fall within a corresponding valid pressure value range:

- applying an adjusting procedure comprising determining, generating and applying drive signals to the drive members for adjusting the vertical positions of said support feet until all pressure values fall within the valid pressure value ranges for said support legs, and
- keeping said base plane within said predetermined offset threshold angle from said horizontal plane during a working procedure, by applying the adjusting procedure.

In one embodiment the valid pressure value ranges include maximal pressure values for each of said support legs. If it is determined that any of the measured pressure value exceeds a corresponding maximal pressure value, the adjusting procedure comprises generating drive signals to adjust the vertical positions of the support feet until none of the sensed pressure values exceed its respective corresponding maximal pressure value.

In another embodiment the valid pressure value ranges include minimal pressure values for each of the support legs. If it is determined that any of the measured pressure value is below a corresponding minimal pressure value, the adjusting procedure comprises generating drive signals to adjust the vertical positions of the support feet until none of the sensed pressure values is below its respective corresponding minimal pressure value.

The valid pressure value ranges are determined in relation to one or more parameters of the vehicle, a working equipment of the vehicle, e.g. a crane, and a working procedure to be performed by the working equipment.

In a further embodiment, which is illustrated by the dashed boxes in figure 4, the method comprises:
- setting the control unit to work in a second mode comprising allowing deviation of the base plane in relation to the horizontal plane within a deviation offset angle during a predetermined time period to support a working procedure.

More specifically the second mode includes receiving an equipment control signal including working parameters of a working procedure to be performed by a working equipment of the vehicle, and determining extended drive signals to support equipment movements related to said working procedure in dependence of the working parameters and thereby allowing said deviation of the base plane, and applying the extended drive signals to said drive members to adjust the vertical positions of said feet of said support legs.

Preferably, the deviation offset angle is larger than the predetermined offset threshold angle.

The second mode of operation may be manually initiated by an operator. That may be achieved by pressing a button and thereby generating a second mode control signal that is received by the control unit that in turn activates or deactivates the second mode in dependence of the received second mode control signal.

The embodiments related to applying the second mode of operation are further disclosed in relation to the detailed description of the system above.

The present invention is not limited to the above-described preferred embodiments. Various alternatives, modifications and equivalents may be used. Therefore, the above embodiments should not be taken as limiting the scope of the invention, which is defined by the appending claims.

## Claims

1. A levelling system (2) for a vehicle (4), configured to automatically control levelling of the vehicle by controlling the vertical extensions of support legs (6) provided at the vehicle for stabilizing purposes,
the levelling system (2) comprises a control unit (8), and a sensor arrangement (10) that is adapted to measure the deviation of a base plane of the vehicle with respect to a horizontal plane and to determine and generate a deviation signal (12) in dependence of said measured deviation,
the control unit (8) is configured to be in a first mode comprising to generate drive signals (14), in dependence of said deviation signal (12), to be applied to drive members (16) configured to individually adjust the vertical position of a support foot (18) of each of said support legs (6) such that the base plane with respect to a horizontal plane is within a predetermined offset threshold angle from the horizontal plane, wherein the levelling system (2) further comprises pressure sensor members (20) configured to sense pressure values in an essentially vertical direction of each of the support legs (6), and to generate pressure signals (22) in dependence of said sensed pressure values, the control unit (8) is configured to receive said pressure signals (22) and to compare said sensed pressure values to respective predetermined valid pressure value ranges for each of said support legs (6), wherein if it is determined, by said control unit, that any of said sensed pressure values does not fall within a corresponding valid pressure value range, the control unit is configured to apply an adjusting procedure resulting in that drive signals (14) are determined, generated and applied to the drive members (16) to adjust the vertical positions of said support feet (18) until all said
pressure values fall within the valid pressure value ranges for said support legs, and wherein the control unit is configured to keep the base plane within said predetermined offset threshold angle from said horizontal plane during a working procedure, by applying the adjusting procedure, wherein the valid pressure ranges include maximal pressure values, and minimal press-sure values for each of the support legs (6), wherein said maximal pressure values, and minimal pressure values, are determined in relation to one or many parameters of the vehicle (4), a working equipment (24) of the vehicle, e.g. a crane, and a working procedure to be performed by the working equipment (24), wherein if it is determined, by the control unit, that any of said sensed pressure values exceeds a corresponding maximal pressure value, the control unit is configured to apply said adjusting procedure that comprises generating drive signals (14) to adjust the vertical positions of said support feet (18) until none of said sensed pressure values exceed its
respective corresponding maximal pressure value, and wherein if it is determined, by the control unit, that any of said measured pressure values is below a corresponding minimal pressure value, the control unit is configured to apply said adjusting procedure that comprises generating drive signals (14) to adjust the vertical positions of said support feet (18) until none of said sensed pressure values is below its respective corresponding minimal pressure value.

2. The levelling system (2) according to claims 1, wherein the control unit (8) is configured to work in a second mode comprising allowing deviation of the base plane in relation to the horizontal plane within a deviation offset angle during a predetermined time period to support a working procedure.

3. The levelling system (2) according to claim 2, wherein said second mode includes that the control unit (8) is configured to receive an equipment control signal (26) including working parameters of a working procedure to be performed by a working equipment (24) of the vehicle, and that the control unit (8) is configured to determine extended drive signals (28) to support equipment movements related to said working procedure in dependence of said working parameters and thereby allowing said deviation of the base plane, wherein said extended drive signals (28) are to be applied, by said control unit (8), to said drive members (16) to adjust the vertical positions of said feet (18) of said support legs (6).

4. The levelling system (2) according to claim 2 or 3, wherein said deviation offset angle is larger than said predetermined offset threshold angle.

5. The levelling system (2) according to any of claims 2-4, wherein said control unit is configured to receive a second mode control signal and to activate or deactivate said second mode in dependence of a received second mode control signal.

6. Method of automatically controlling levelling of a vehicle by a levelling system, according to any of claims 1-5, for the vehicle by controlling the vertical extensions of support legs provided at the vehicle for stabilizing purposes, the method comprises:
- measuring, by said sensor arrangement, a deviation of a base plane of the vehicle with respect to a horizontal plane,
- determining and generating a deviation signal in dependence of said measured deviation,
- generating, by said control unit when set in a first mode, drive signals, in dependence of said deviation signal, and applying said drive signals to drive members, and
- individually adjusting, by said drive members, the vertical position of a support foot of each of said support legs, such that said deviation is within a predetermined offset threshold angle from the horizontal plane,
**characterized in that** said method further comprises:
- sensing, by pressure sensor members, pressure values in an essentially vertical direction of each of the support legs, and generating pressure signals in dependence of said sensed pressure values,
- receiving said pressure signals, by the control unit, and comparing said sensed pressure values to respective predetermined valid pressure value ranges for each of said support legs, wherein if it is determined that any of the sensed pressure value does not fall within a corresponding valid pressure value range:
- applying an adjusting procedure comprising determining, generating and applying drive signals to the drive members for adjusting the vertical positions of said support feet until all pressure values fall within the valid pressure value ranges for said support legs, and
- keeping said base plane within said predetermined offset threshold angle from said horizontal plane during a working procedure, by applying the adjusting procedure, wherein the valid pressure ranges include maximal pressure values, and minimal press-sure values for each of the support legs, and wherein said maximal pressure values, and minimal pressure values, are determined in relation to one or many parameters of the vehicle, a working equipment of the vehicle, e.g. a crane, and a working procedure to be performed by the working equipment,
wherein if it is determined that any of the measured pressure value exceeds a corresponding maximal pressure value, said adjusting procedure comprises generating drive signals to adjust the vertical positions of said support feet until none of the sensed pressure values exceed its respective corresponding maximal pressure value,
and wherein if it is determined that any of the measured pressure value is below a corresponding minimal pressure value, said adjusting procedure comprises generating drive signals (14) to adjust the vertical positions of said support feet (18) until none of the sensed pressure values is below its respective corresponding minimal pressure value.

7. The method according to claim 6, comprising setting the control unit to work in a second mode comprising allowing deviation of the base plane in relation to the horizontal plane within a deviation offset angle during a predetermined time period to support a working procedure.

8. The method according to claim 7, wherein said second mode includes receiving an equipment control signal including working parameters of a working procedure to be performed by a working equipment of the vehicle, and determining extended drive signals to support equipment movements related to said working procedure in dependence of said working parameters and thereby allowing said deviation of the base plane, and applying said extended drive signals to said drive members to adjust the vertical positions of said feet of said support legs.

9. The method according to claim 7 or 8, wherein said deviation offset angle is larger than said predetermined offset threshold angle.

10. The method according to any of claims 7-9, comprising receiving a second mode control signal and activating or deactivating said second mode in dependence of a received second mode control signal.

11. A vehicle comprising a levelling system according to any of claims 1-5.

## Patentansprüche

1. Nivelliersystem (2) für ein Fahrzeug (4), das dazu konfiguriert ist, die Nivellierung des Fahrzeugs durch Steuern der vertikalen Erstreckungen von Stützschenkeln (6), die an dem Fahrzeug zu Stabilisierungszwecken bereitgestellt sind, automatisch zu steuern,
wobei das Nivelliersystem (2) eine Steuereinheit (8) und eine Sensoranordnung (10), die dazu ausgelegt ist, die Abweichung einer Basisebene des Fahrzeugs in Bezug auf eine horizontale Ebene zu messen und ein Abweichungssignal (12) in Abhängigkeit von der gemessenen Abweichung zu bestimmen und zu erzeugen, umfasst,
die Steuereinheit (8) dazu konfiguriert ist, in einem ersten Modus zu sein, der das Erzeugen von Ansteuersignalen (14) in Abhängigkeit von dem Abweichungssignal (12) umfasst, das auf Ansteuerelemente (16) anzuwenden ist, die dazu konfiguriert sind, die vertikale Position eines Stützfußes (18) jedes der Stützschenkel (6) einzeln anzupassen, sodass die Basisebene in Bezug auf eine horizontale Ebene innerhalb eines vorbestimmten Schwellenversatzwinkels von der horizontalen Ebene liegt, wobei das Nivelliersystem (2) ferner Drucksensorelemente (20) umfasst, die dazu konfiguriert sind, Druckwerte in einer im Wesentlichen vertikalen Richtung jedes der Stützschenkel (6) zu erfassen und Drucksignale (22) in Abhängigkeit von den erfassten Druckwerten zu erzeugen, die Steuereinheit (8) dazu konfiguriert ist, die Drucksignale (22) zu empfangen und die erfassten Druckwerte mit jeweiligen vorbestimmten gültigen Druckwertbereichen für jeden der Stützschenkel (6) zu vergleichen, wobei, wenn durch die Steuereinheit bestimmt wird, dass einer der erfassten Druckwerte nicht innerhalb eines entsprechenden gültigen Druckwertbereichs liegt, die Steuereinheit dazu konfiguriert ist, einen Anpassungsvorgang anzuwenden, der dazu führt, dass Ansteuersignale (14) bestimmt, erzeugt und auf die Ansteuerelemente (16) angewendet werden, um die vertikalen Positionen der Stützfüße (18) anzupassen, bis alle Druckwerte innerhalb des gültigen Druckwertbereichs für die Stützschenkel liegen, und wobei die Steuereinheit dazu konfiguriert ist, die Basisebene innerhalb des vorbestimmten Schwellenversatzwinkels von der horizontalen Ebene während eines Arbeitsvorgangs durch Anwenden des Anpassungsvorgangs zu halten, wobei die gültigen Druckbereiche maximale Druckwerte und minimale Druckwerte für jeden der Stützschenkel (6) beinhalten, wobei die maximalen Druckwerte und die minimalen Druckwerte in Bezug auf einen oder viele Parameter des Fahrzeugs (4), einer Arbeitsausrüstung (24) des Fahrzeugs, z. B. eines Krans, und eines Arbeitsvorgangs, der von der Arbeitsausrüstung (24) durchzuführen ist, bestimmt werden,
wobei, wenn durch die Steuereinheit bestimmt wird, dass einer der erfassten Druckwerte einen entsprechenden maximalen Druckwert überschreitet, die Steuereinheit dazu konfiguriert ist, den Anpassungsvorgang anzuwenden, der Erzeugen von Ansteuersignalen (14) umfasst, um die vertikalen Positionen der Stützfüße (18) anzupassen, bis keiner der erfassten Druckwerte seinen jeweiligen entsprechenden maximalen Druckwert überschreitet,
und wobei, wenn durch die Steuereinheit bestimmt wird, dass einer der gemessenen Druckwerte unter einem entsprechenden minimalen Druckwert liegt, die Steuereinheit dazu konfiguriert ist, den Anpassungsvorgang anzuwenden, der Erzeugen von Ansteuersignalen (14) umfasst, um die vertikalen Positionen der Stützfüße (18) anzupassen, bis keiner der erfassten Druckwerte unter seinem jeweiligen entsprechenden minimalen Druckwert liegt.

2. Nivelliersystem (2) nach Anspruch 1, wobei die Steuereinheit (8) dazu konfiguriert ist, in einem zweiten Modus zu arbeiten, der ein Ermöglichen einer Abweichung der Basisebene in Bezug auf die horizontale Ebene innerhalb eines Abweichungsversatzwinkels während eines vorbestimmten Zeitraums, um einen Arbeitsvorgang zu unterstützen, umfasst.

3. Nivelliersystem (2) nach Anspruch 2, wobei der zweite Modus beinhaltet, dass die Steuereinheit (8) dazu konfiguriert ist, ein Ausrüstungssteuersignal (26) zu empfangen, das Arbeitsparameter eines Arbeitsvorgangs beinhaltet, der von einer Arbeitsausrüstung (24) des Fahrzeugs durchzuführen ist, und dass die Steuereinheit (8) dazu konfiguriert ist, erweiterte Ansteuersignale (28) zu bestimmen, um Bewegungen der Ausrüstung in Bezug auf den Arbeitsvorgang in Abhängigkeit von den Arbeitsparametern zu unterstützen und dadurch die Abweichung der Basisebene zu ermöglichen, wobei die erweiterten Ansteuersignale (28) durch die Steuereinheit (8) auf die Ansteuerelemente (16) anzuwenden sind, um die vertikalen Positionen der Füße (18) der Stützschenkel (6) anzupassen.

4. Nivelliersystem (2) nach Anspruch 2 oder 3, wobei der Abweichungsversatzwinkel größer als der vorbestimmte Schwellenversatzwinkel ist.

5. Nivelliersystem (2) nach einem der Ansprüche 2-4, wobei die Steuereinheit dazu konfiguriert ist, ein Steuersignal für den zweiten Modus zu empfangen und den zweiten Modus in Abhängigkeit von einem empfangenen Steuersignal für den zweiten Modus zu aktivieren oder zu deaktivieren.

6. Verfahren zum automatischen Steuern der Nivellierung eines Fahrzeugs durch ein Nivelliersystem nach einem der Ansprüche 1-5 für das Fahrzeug durch Steuern der vertikalen Erstreckungen der Stützschenkel, die an dem Fahrzeug zu Stabilisierungszwecken bereitgestellt sind, wobei das Verfahren Folgendes umfasst:
- Messen, durch die Sensoranordnung, einer Abweichung einer Basisebene des Fahrzeugs in Bezug auf eine horizontale Ebene,
- Bestimmen und Erzeugen eines Abweichungssignals in Abhängigkeit von der gemessenen Abweichung,
- Erzeugen, durch die Steuereinheit, wenn sie in einem ersten Modus eingestellt ist, von Ansteuersignalen in Abhängigkeit von dem Abweichungssignal und Anwenden der Ansteuersignale auf die Ansteuerelemente und
- einzelnes Anpassen, durch die Ansteuerelemente, der vertikalen Position eines Stützfußes jedes der Stützschenkel, sodass die Abweichung innerhalb eines vorbestimmten Schwellenversatzwinkels von der horizontalen Ebene liegt,
**dadurch gekennzeichnet, dass** das Verfahren ferner Folgendes umfasst:
- Erfassen, durch Drucksensorelemente, von Druckwerten in einer im Wesentlichen vertikalen Richtung jedes der Stützschenkel und Erzeugen von Drucksignalen in Abhängigkeit von den erfassten Druckwerten,
- Empfangen der Drucksignale, durch die Steuereinheit, und Vergleichen der erfassten Druckwerte mit jeweiligen vorbestimmten gültigen Druckwertbereichen für jeden der Stützschenkel, wobei, wenn bestimmt wird, dass einer der erfassten Druckwerte nicht innerhalb eines entsprechenden gültigen Druckwertbereichs liegt:
- Anwenden eines Anpassungsvorgangs, umfassend Bestimmen, Erzeugen und Anwenden von Ansteuersignalen auf die Ansteuerelemente zum Anpassen der vertikalen Positionen der Stützfüße, bis alle Druckwerte innerhalb der gültigen Druckwertbereiche für die Stützschenkel liegen, und
- Halten der Basisebene innerhalb des vorbestimmten Schwellenversatzwinkels von der horizontalen Ebene während eines Arbeitsvorgangs durch Anwenden des Anpassungsvorgangs, wobei die gültigen Druckbereiche maximale Druckwerte und minimale Druckwerte für jeden der Stützschenkel beinhalten, und wobei die maximalen Druckwerte und die minimalen Druckwerte in Bezug auf einen oder viele Parameter des Fahrzeugs, einer Arbeitsausrüstung des Fahrzeugs, z. B. eines Krans, und eines Arbeitsvorgangs, der von der Arbeitsausrüstung durchzuführen ist, bestimmt werden,
wobei, wenn bestimmt wird, dass einer der gemessenen Druckwerte einen entsprechenden maximalen Druckwert überschreitet, der Anpassungsvorgang Erzeugen von Ansteuersignalen umfasst, um die vertikalen Positionen der Stützfüße anzupassen, bis keiner der erfassten Druckwerte seinen jeweiligen entsprechenden maximalen Druckwert überschreitet, und wobei, wenn bestimmt wird, dass einer der gemessenen Druckwerte unter einem entsprechenden minimalen Druckwert liegt, der Anpassungsvorgang Erzeugen von Ansteuersignalen (14) umfasst, um die vertikalen Positionen der Stützfüße (18) anzupassen, bis keiner der erfassten Druckwerte unter seinem jeweiligen entsprechenden minimalen Druckwert liegt.

7. Verfahren nach Anspruch 6, umfassend Einstellen der Steuereinheit, um in einem zweiten Modus zu arbeiten, der ein Ermöglichen einer Abweichung der Basisebene in Bezug auf die horizontale Ebene innerhalb eines Abweichungsversatzwinkels während eines vorbestimmten Zeitraums, um einen Arbeitsvorgang zu unterstützen, umfasst.

8. Verfahren nach Anspruch 7, wobei der zweite Modus Empfangen eines Ausrüstungssteuersignals, das Arbeitsparameter eines Arbeitsvorgangs beinhaltet, der von einer Arbeitsausrüstung des Fahrzeugs durchzuführen ist, und Bestimmen von erweiterten Ansteuersignalen, um Bewegungen der Ausrüstung in Bezug auf den Arbeitsvorgang in Abhängigkeit von den Arbeitsparametern zu unterstützen und dadurch die Abweichung der Basisebene zu ermöglichen, und Anwenden der erweiterten Ansteuersignale auf die Ansteuerelemente, um die vertikalen Positionen der Füße der Stützschenkel anzupassen, beinhaltet.

9. Verfahren nach Anspruch 7 oder 8, wobei der Abweichungsversatzwinkel größer als der vorbestimmte Schwellenversatzwinkel ist.

10. Verfahren nach einem der Ansprüche 7-9, umfassend Empfangen eines Steuersignals für den zweiten Modus und Aktivieren oder Deaktivieren des zweiten Modus in Abhängigkeit von einem empfangenen Steuersignal für den zweiten Modus.

11. Fahrzeug, umfassend ein Nivelliersystem nach einem der Ansprüche 1-5.

## Revendications

1. Système de mise à niveau (2) pour un véhicule (4), configuré pour commander automatiquement la mise à niveau du véhicule en commandant les extensions verticales des pieds de support (6) prévus au niveau du véhicule à des fins de stabilisation.
le système de mise à niveau (2) comprend une unité de commande (8), et un agencement de capteur (10) qui est adapté pour mesurer l'écart d'un plan de base du véhicule par rapport à un plan horizontal et pour déterminer et générer un signal d'écart (12) en fonction dudit écart mesuré,
l'unité de commande (8) est configurée pour être dans un premier mode comprenant la génération de signaux d'entraînement (14), en fonction dudit signal d'écart (12), à appliquer aux éléments d'entraînement (16) configurés pour ajuster individuellement la position verticale d'un pied de support (18) de chacune desdites jambes de support (6) de telle sorte que le plan de base par rapport à un plan horizontal soit à l'intérieur d'un angle de seuil décalé prédéterminé par rapport au plan horizontal, dans lequel
le système de mise à niveau (2) comprend en outre des éléments capteurs de pression (20) configurés pour détecter des valeurs de pression dans une direction essentiellement verticale de chacune des jambes de support (6), et pour générer des signaux de pression (22) en fonction desdites valeurs de pression détectées, l'unité de commande (8) est configurée pour recevoir lesdits signaux de pression (22) et pour comparer lesdites valeurs de pression détectées à des plages de valeurs de pression valides prédéterminées respectives pour chacune desdites jambes de support (6), dans lequel s'il est déterminé, par ladite unité de commande, que l'une quelconque desdites valeurs de pression détectées ne tombe pas dans une plage de valeurs de pression valides correspondante, l'unité de commande est configurée pour appliquer une procédure d'ajustement ayant pour résultat que des signaux d'entraînement (14) sont déterminés, générés et appliqués aux éléments d'entraînement (16) pour ajuster les positions verticales desdits pieds de support (18) jusqu'à ce que toutes lesdites valeurs de pression tombent dans les plages de valeurs de pression valides pour lesdites jambes de support, et dans lequel l'unité de commande est configurée pour maintenir le plan de base à l'intérieur dudit angle de seuil décalé prédéterminé par rapport audit plan horizontal pendant une procédure de travail, en appliquant la procédure d'ajustement, dans lequel les plages de pression valides comprennent des valeurs de pression maximales, et des valeurs de pression minimales pour chacune des jambes de support (6), dans lequel lesdites valeurs de pression maximales, et valeurs de pression minimales, sont déterminées en relation avec un ou plusieurs paramètres du véhicule (4), un équipement de chantier (24) du véhicule, par exemple une grue, et une procédure de travail à exécuter par l'équipement de chantier (24),
dans lequel s'il est déterminé, par l'unité de commande, que l'une quelconque desdites valeurs de pression détectées dépasse une valeur de pression maximale correspondante, l'unité de commande est configurée pour appliquer ladite procédure d'ajustement qui comprend la génération de signaux d'entraînement (14) pour ajuster les positions verticales desdits pieds de support (18) jusqu'à ce qu'aucune desdites valeurs de pression détectées ne dépasse sa valeur de pression maximale correspondante respective,
et dans lequel s'il est déterminé, par l'unité de commande, que l'une quelconque desdites valeurs de pression mesurées est inférieure à une valeur de pression minimale correspondante, l'unité de commande est configurée pour appliquer ladite procédure d'ajustement qui comprend la génération de signaux d'entraînement (14) pour ajuster les positions verticales desdits pieds de support (18) jusqu'à ce qu'aucune desdites valeurs de pression détectées ne soit inférieure à sa valeur de pression minimale correspondante respective.

2. Système de mise à niveau (2) selon la revendication 1, dans lequel l'unité de commande (8) est configurée pour fonctionner dans un deuxième mode comprenant l'autorisation d'une déviation du plan de base par rapport au plan horizontal dans un angle de décalage de déviation pendant une période de temps prédéterminée pour supporter une procédure de travail.

3. Système de mise à niveau (2) selon la revendication 2, dans lequel ledit deuxième mode comprend le fait que l'unité de commande (8) est configurée pour recevoir un signal de commande d'équipement (26) comprenant des paramètres de travail d'une procédure de travail à exécuter par un équipement de chantier (24) du véhicule, et que l'unité de commande (8) est configurée pour déterminer des signaux d'entraînement étendus (28) pour supporter des mouvements d'équipement liés à ladite procédure de travail en fonction desdits paramètres de travail et permettant ainsi ladite déviation du plan de base, dans lequel lesdits signaux d'entraînement étendus (28) doivent être appliqués, par ladite unité de commande (8), auxdits éléments d'entraînement (16) pour ajuster les positions verticales desdits pieds (18) desdites jambes de support (6).

4. Système de mise à niveau (2) selon la revendication 2 ou 3, dans lequel ledit angle de décalage de déviation est supérieur audit angle de seuil de décalage prédéterminé.

5. Système de mise à niveau (2) selon l'une quelconque des revendications 2 à 4, dans lequel ladite unité de commande est configurée pour recevoir un deuxième signal de commande de mode et pour activer ou désactiver ledit deuxième mode en fonction d'un deuxième signal de commande de mode reçu.

6. Procédé de commande automatique de la mise à niveau d'un véhicule par un système de mise à niveau selon l'une quelconque des revendications 1 à 5, pour le véhicule en commandant les extensions verticales des jambes de support prévues au niveau du véhicule à des fins de stabilisation, le procédé comprend :
- la mesure, par ledit agencement de capteur, d'une déviation d'un plan de base du véhicule par rapport à un plan horizontal,
- la détermination et génération d'un signal d'écart en fonction dudit écart mesuré,
- la génération, par ladite unité de commande lorsqu'elle est réglée dans un premier mode, de signaux d'entraînement, en fonction dudit signal d'écart, et application desdits signaux d'entraînement aux éléments d'entraînement, et
- le réglage individuel, par lesdits éléments d'entraînement, de la position verticale d'un pied de support de chacune desdites jambes de support, de telle sorte que ladite déviation se situe dans un angle de seuil décalé prédéterminé par rapport au plan horizontal, **caractérisé en ce que** ledit procédé comprend en outre :
- la détection, par des éléments capteurs de pression, de valeurs de pression dans une direction essentiellement verticale de chacune des jambes de support, et la génération de signaux de pression en fonction desdites valeurs de pression détectées,
- la réception desdits signaux de pression, par l'unité de commande, et la comparaison desdites valeurs de pression détectées à des plages de valeurs de pression valides prédéterminées respectives pour chacune desdites jambes de support, dans lequel, s'il est déterminé que l'une quelconque des valeurs de pression détectées ne tombe pas dans une plage de valeurs de pression valides correspondante :
- l'application d'une procédure d'ajustement comprenant la détermination, la génération et l'application de signaux d'entraînement aux éléments d'entraînement pour ajuster les positions verticales desdits pieds de support jusqu'à ce que toutes les valeurs de pression tombent dans les plages de valeurs de pression valides pour lesdites jambes de support, et
- le maintien dudit plan de base dans ledit angle de seuil de décalage prédéterminé par rapport audit plan horizontal pendant une procédure de travail, en appliquant la procédure d'ajustement, dans lequel les plages de pression valides comprennent des valeurs de pression maximales, et des valeurs de pression minimales pour chacune des jambes de support, et dans lequel lesdites valeurs de pression maximales et valeurs de pression minimales sont déterminées par rapport à un ou plusieurs paramètres du véhicule, un équipement de chantier du véhicule, par exemple une grue, et une procédure de travail à exécuter par l'équipement de chantier,
dans lequel, s'il est déterminé que l'une quelconque des valeurs de pression mesurées dépasse une valeur de pression maximale correspondante, ladite procédure d'ajustement comprend la génération de signaux d'entraînement pour ajuster les positions verticales desdits pieds de support jusqu'à ce qu'aucune des valeurs de pression détectées ne dépasse sa valeur de pression maximale correspondante respective, et dans lequel, s'il est déterminé que l'une quelconque des valeurs de pression mesurées est inférieure à une valeur de pression minimale correspondante, ladite procédure d'ajustement comprend la génération de signaux d'entraînement (14) pour ajuster les positions verticales desdits pieds de support (18) jusqu'à ce qu'aucune des valeurs de pression détectées ne soit inférieure à sa valeur de pression minimale correspondante respective.

7. Procédé selon la revendication 6, comprenant l'étape consistant à ajuster l'unité de commande pour qu'elle travaille dans un deuxième mode comprenant l'étape consistant à permettre une déviation du plan de base par rapport au plan horizontal dans un angle de décalage de déviation pendant une période de temps prédéterminée pour supporter une procédure de travail.

8. Procédé selon la revendication 7, dans lequel ledit deuxième mode comprend la réception d'un signal de commande d'équipement comprenant des paramètres de travail d'une procédure de travail à exécuter par un équipement de chantier du véhicule, et la détermination de signaux d'entraînement étendus pour supporter des mouvements d'équipement liés à ladite procédure de travail en fonction desdits paramètres de travail et permettant ainsi ladite déviation du plan de base, et l'application desdits signaux d'entraînement étendus auxdits éléments d'entraînement pour ajuster les positions verticales desdits pieds desdites jambes de support.

9. Procédé selon la revendication 7 ou 8, dans lequel ledit angle de décalage de déviation est supérieur audit angle de seuil de décalage prédéterminé.

10. Procédé selon l'une quelconque des revendications 7 à 9, comprenant la réception d'un deuxième signal de commande de mode et l'activation ou la désactivation dudit deuxième mode en fonction d'un deuxième signal de commande de mode reçu.

11. Véhicule comprenant un système de mise à niveau selon l'une quelconque des revendications 1 à 5.
